# EUROPÄISCHE PATENTSCHRIFT

(11) **EP 3 130 889 B1**
(45) Veröffentlichungstag und Bekanntmachung des Hinweises auf die Patenterteilung: **13.06.2018**
(21) Anmeldenummer: 16187158.7
(22) Anmeldetag: 15.07.2010
(51) Int. Cl.: G01C 15/00, G01C 3/08, G01S 17/08, H01L 31/107, G01S 17/10, G01S 17/89, G01S 7/481, G01S 7/486, G01S 7/491

(54) **OPTISCHE ENTFERNUNGSMESSVORRICHTUNG**
OPTICAL DISTANCE MEASURING DEVICE
TÉLÉMÈTRE OPTIQUE

(30) Priorität: 11.09.2009 DE 102009029372
(43) Veröffentlichungstag der Anmeldung: 15.02.2017
(62) Teilanmeldung aus: 10734971.4
(73) Patentinhaber: ROBERT BOSCH GMBH, 70442 Stuttgart (DE)
(72) Erfinder: Eisele, Andreas, 70771 Leinfelden-Echterdingen (DE); Wolst, Oliver, Clayton, 3169 (AU); Schmidtke, Bernd, 71229 Leonberg (DE)

(56) Entgegenhaltungen:
- DE-A1-102006 013 290
- US-A1- 2007 182 949
- US-B1- 7 301 608

## Beschreibung

### GEBIET DER ERFINDUNG

Die Erfindung betrifft eine Messvorrichtung zur Messung einer Entfernung zwischen der Messvorrichtung und einem Zielobjekt mit Hilfe von optischer Messstrahlung.

### HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, ausrichten. Das von dem angepeilten Zielobjekt reflektierte oder gestreute, rücklaufende Licht wird von dem Gerät zumindest teilweise detektiert und zur Ermittlung der zu messenden Entfernung verwendet. Ein typischer Messbereich liegt dabei in einem Bereich von Entfernungen von wenigen Zentimetern bis zu mehreren 100 Metern.

Um die Entfernung zu dem Zielobjekt mit einem Lichtstrahl messen zu können, wird der Lichtstrahl beispielsweise in seiner Intensität zeitlich moduliert. Es können beispielsweise Lichtpulse ausgesendet werden und eine Laufzeit eines Lichtpulses von der Aussendung bis zur Detektion gemessen werden und daraus die Entfernung zu dem Zielobjekt errechnet werden. Hierzu müssen jedoch sehr kurze Lichtpulse ausgesendet werden und eine sehr schnelle Detektionselektronik verwendet werden, um ausreichend genaue Messergebnisse erhalten zu können. Alternativ kann ein Lichtstrahl in seiner Intensität zeitlich periodisch moduliert werden und eine Phasenverschiebung zwischen dem ausgesendeten und dem detektierten Lichtsignal verwendet werden, um die Laufzeit und damit die Entfernung zum Zielobjekt zu bestimmen. Das Prinzip der Laserentfernungsmessung ist allgemein unter der Bezeichnung "Time of Flight Ranging" beispielsweise mit kontinuierlicher Modulation der Intensität des Laserstrahls bekannt.

Es sind ferner sogenannte dreidimensionale (3D) Kameras bekannt, bei denen zusätzlich zu einer optischen Abbildung eines aufzunehmenden Objektes auch der jeweilige Abstand eines Bereichs auf der Oberfläche des aufzunehmenden Objektes zu der Kamera detektiert werden soll. Die Kamera weist hierzu eine abbildende Optik auf, die ein Bild des Objektes scharf auf eine Oberfläche eines dahinter angeordneten Detektors projiziert. Der Detektor weist dabei eine Vielzahl Matrix-artig angeordneter Pixel auf. Jedes der Pixel kann dabei eine Bildinformation wie beispielsweise eine Farbe oder Lichtintensität des von einem Oberflächenbereichs des Zielobjekts reflektierten Lichtes ermitteln. Zusätzlich kann eine Information über eine Entfernung zwischen der Kamera und dem entsprechenden Oberflächenbereich des Zielobjekts ermittelt werden. Hierzu kann das Zielobjekt mit zeitlich modulierter Laserstrahlung beleuchtet werden und die von dem Zielobjekt rückreflektierte und auf den Detektor mit Hilfe einer Abbildungsoptik abgebildete Strahlung durch Bestimmen der Flugzeit dazu verwendet werden, um eine ortsaufgelöste Information über Entfernungen zu den jeweiligen Oberflächenbereichen des Zielobjektes zu ermitteln.

Allerdings benötigt eine solche dreidimensionale Kamera zusätzlich zu einem ortsauflösenden Detektor mit einer Vielzahl von Pixeln auch eine abbildende Optik, um jeden Oberflächenbereich des Zielobjektes genau auf ein Pixel abzubilden, wobei das von diesem Pixel ermittelte Detektionssignal dann zur Bestimmung der Entfernung zu dem jeweiligen Oberflächenbereich herangezogen werden kann. Dies erfordert eine verhältnismäßig komplizierte, fokussierende Optik sowie die Möglichkeit einer einzelnen Auswertung von Detektionssignalen jedes der Pixel.

Im Gegensatz hierzu werden einfache Entfernungsmessgeräte lediglich dazu verwendet, eine Entfernung zwischen dem Messgerät und dem Zielobjekt bzw. einem mit einem Laserstrahl anvisierten Punkt auf dem Zielobjekt zu ermitteln. Die Entfernung braucht dabei nicht ortsaufgelöst bestimmt werden. Es genügt in der Regel, eine gemittelte Entfernung zu bestimmen. Solche Entfernungsmessgeräte werden häufig in Hand-gehaltenen Geräten eingesetzt, um beispielsweise innerhalb eines Raumes den Abstand eines bestimmten Ortes zu umgebenden Zielobjekten wie zum Beispiel Wänden oder Einrichtungsgegenständen zu bestimmen. Ein Hand-gehaltenes Entfernungsmessgerät sollte dabei vorzugsweise einen möglichst einfachen, robusten und kostengünstigen Aufbau aufweisen und eine einfache Bedienung ermöglichen.
Aus der DE 10 2006 013 290 A1 ist eine Vorrichtung zur optischen Distanzmessung bekannt, bei der ein Detektor einer Empfangseinheit eine Mehrzahl von voneinander getrennten lichtempfindlichen Flächen aufweist, die getrennt voneinander aktivierbar sind. Jede der lichtempfindlichen Flächen weist dabei eine Fotodiode, beispielsweise eine PIN-Diode oder eine APD (Avalanche Photo Diode), oder einen CCD-Chip als lichtempfindliches Element auf. Diese lichtempfindlichen Elemente ermitteln ein analoges Detektionssignal, das einer Intensität des empfangenen Lichtes entspricht. Die lichtempfindlichen Flächen können selektiv aktiviert werden und auf diese Weise zu einer Gesamtdetektionsfläche kombiniert werden, die einem von einer Lichtquelle beleuchteten Teilbereich der Detektorfläche möglichst gut angepasst sein kann, um auf diese Weise ein Signal-Rausch-Verhältnis zu verbessern.
Da das beschriebene herkömmliche Entfernungsmessgerät lichtempfindliche Elemente wie z.B. PIN-Dioden oder APDs (Avalanche Photo Diode) verwendet, die ein analoges Messsignal mit hoher Bandbreite bereitstellen, kann es notwendig sein, zur Auswertung dieser analogen Messsignale eine komplizierte Auswerteelektronik zu verwenden., Die analog arbeitenden lichtempfindlichen Elemente sind häufig mit einer ansonsten in dem Messgerät verwendeten CMOS-Technologie nicht kompatibel.

US 7301608 B1 offenbart eine Entfernungsmessvorrichtung mit Geiger-Modus-Lawinenfotodioden (SPADs), wobei die Entfernung zum Ziel aufgrund eines Satzes von Lawinenereignissen bestimmt wird.

### OFFENBARUNG UND MÖGLICHE AUSFÜHRUNGSFORMEN DER ERFINDUNG

Es kann ein Bedarf an einer Messvorrichtung zur optischen Entfernungsmessung bestehen, die, insbesondere im Vergleich zu den zuvor beschriebenen herkömmlichen Entfernungsmessgeräten, einen vereinfachten Aufbau von darin verwendeten Elektronikkomponenten, insbesondere von Auswertekomponenten zur Auswertung von Detektionssignalen, zulässt. Ferner kann ein Bedarf an einer Entfernungsmessvorrichtung bestehen, die weitgehend mit einer einzigen Fertigungstechnologie, beispielsweise einer CMOS-Technologie, gefertigt werden kann.

Ferner kann ein Bedarf an einer Entfernungsmessvorrichtung bestehen, die möglichst zumindest einen der nachfolgenden Vorteile aufweist:
- Aufweitung einer Justagetoleranz einer Empfangsoptik der Entfernungsmessvorrichtung bezogen auf einen Detektor;
- Reduzierung einer Komplexität und von Anforderungen an eine Empfangsoptik;
- Erhöhung eines Dynamikbereiches insbesondere bei der Messung kleiner Entfernungen;
- Optimierung eines Signal-Rausch-Verhältnisses insbesondere bei der Messung großer Entfernungen; und/oder
- Verringerung einer für die Auswertung benötigten Chipfläche einer integrierten Schaltung.

Die erfindungsgemäße Messvorrichtung zur optischen Entfernungsmessung weist eine Sendeeinrichtung zur Aussendung optischer Messstrahlung auf ein Zielobjekt hin, eine Empfangseinrichtung mit einer Detektionsfläche zur Detektion von von dem Zielobjekt zurücklaufender optischer Messstrahlung und eine Auswerteeinrichtung auf. Die Detektionsfläche der Empfangseinrichtung weist dabei eine Vielzahl von Pixeln auf, wobei jedes Pixel mindestens eine SPAD (Single Photon Avalanche Diode; Einzelphotonenlawinendiode) aufweist. Jedes der Vielzahl von Pixeln ist mit der Auswerteeinrichtung direkt oder indirekt über weitere zwischengeschaltete Bauelemente verbunden. Die Sendeeinrichtung und die Empfangseinrichtung sind dabei derart ausgelegt, dass von dem Zielobjekt zurücklaufende optische Messstrahlung bei einer vorsehungsgemäßen Verwendung der Entfernungsmesseinrichtung jeweils eine Mehrzahl von Pixeln gleichzeitig beleuchtet. Die Auswerteeinrichtung ist dabei dazu ausgelegt, eine Entfernung zwischen der Messvorrichtung und dem Zielobjekt basierend auf einer Auswertung von Detektionssignalen mehrerer Pixel, insbesondere mehrerer der gleichzeitig beleuchteten Pixel, zu ermitteln. Wenigstens einige Pixel enthalten jeweils eine Mehrzahl von SPADS. Die Sendeeinrichtung kann eine Lichtquelle, beispielsweise in Form einer LED, eines Lasers oder einer Laserdiode sein, die Licht zeitlich moduliert hin zu dem Zielobjekt aussendet. Die zeitliche Modulation kann hierbei kontinuierlich und/oder periodisch, beispielsweise sinusartig, erfolgen. Es können auch Pulszüge, beispielsweise nichtperiodisch wie z.B. in Form von sogenannten Pseudo-Noise-Pulsabfolgen ausgesendet werden.
Die Empfangseinrichtung kann sich von Empfangseinrichtungen, wie sie in herkömmlichen Entfernungsmessgeräten verwendet werden, dahingehend unterscheiden, dass anstatt analog arbeitender lichtempfindlicher Elemente, die gegebenenfalls zusammengeschaltet werden können, um ein analoges Gesamtsignal bereitzustellen, eine Vielzahl von Pixeln innerhalb einer Detektionsfläche vorgesehen sein kann, wobei jedes Pixel eine oder mehrere SPADs beinhaltet. Wie weiter unten noch detaillierter erläutert, ist eine SPAD dabei ein lichtempfindliches Element, das abhängig von einer auftreffenden Lichtintensität ein digitales Detektionssignal liefert. Jedes der Pixel kann dabei direkt oder beispielsweise unter Zwischenschaltung eines Multiplexers, der dazu ausgelegt ist, Detektionssignale mehrerer Pixel selektiv weiterzuleiten, mit der Auswerteeinrichtung verbunden sein. Auf diese Weise kann zum Beispiel erreicht werden, dass Detektionssignale einzelner Pixel oder einer Gruppe von Pixeln unabhängig von Detektionssignalen anderer Pixel von der Auswerteeinrichtung ausgewertet werden können.
Die Sendeeinrichtung und die Empfangseinrichtung sind derart ausgelegt und aufeinander abgestimmt, dass von dem Zielobjekt zurücklaufende optische Messstrahlung unter normalen Messbedingungen, das heißt beispielsweise bei Messabständen von wenigen Zentimetern bis zu einigen 100 Metern, eine Mehrzahl von Pixeln gleichzeitig beleuchtet werden. Die Tatsache, dass eine Mehrzahl von Pixeln gleichzeitig beleuchtet wird, soll hierbei jedoch nicht wie bei herkömmlichen 3D-Kameras dazu benutzt werden, ein Abbild des Zielobjektes bzw. eine räumliche Auflösung hinsichtlich der Entfernung zu einzelnen Teilbereichen auf einer Oberfläche des Zielobjektes zu detektieren, sondern soll, wie weiter unten noch detaillierter erläutert, unter anderem Vorteile hinsichtlich einer Detektionsempfindlichkeit und/oder einer Justagetoleranz ermöglichen. Die Entfernung zwischen der Messvorrichtung und dem Zielobjekt wird dabei basierend auf einer Auswertung von Detektionssignalen mehrerer Pixel, insbesondere mehrerer der gleichzeitig beleuchteten Pixel, ermittelt.

Die Sendeeinrichtung kann hierzu einen Messstrahl aussenden, dessen Querschnitt ausreichend groß ist, dass der von dem Zielobjekt zurücklaufende Anteil des Messstrahls stets eine Mehrzahl von Pixeln beleuchtet. Um die von dem Zielobjekt zurücklaufende Messstrahlung zu bündeln und auf die Detektionsfläche zu leiten, um auf diese Weise für ein ausreichend starkes Detektionssignal zu sorgen, kann innerhalb eines optischen Weges von der Sendeeinrichtung zu der Empfangseinrichtung eine einfache Optik, beispielsweise in Form einer oder mehrerer Linsen, vorgesehen sein. Diese einfache Optik kann kostensparend und aufwandsreduzierend als nicht-automatisch-fokussierende Optik ("Fix-Fokus") ausgestaltet sein. Da eine solche nicht-automatisch-fokussierende Optik mit fester Brennweite einen von dem Zielobjekt zurücklaufenden Messstrahl nur dann optimal, d.h. mit kleinstem Spot-Durchmesser, auf die Detektionsfläche der Empfangseinrichtung fokussieren kann, wenn sich das Zielobjekt in dem der Brennweite und Bildebene entsprechenden Objektabstand zu der Messvorrichtung befindet, kann die Anzahl von Pixeln, die durch von dem Zielobjekt zurücklaufende Messstrahlung gleichzeitig beleuchtet werden, in Abhängigkeit von einem Abstand zwischen dem Zielobjekt und dem Messobjekt variieren. Beispielsweise kann die Optimierung des optischen Empfangssystems für den Empfang von Messstrahlung von weit entfernten Zielobjekten mit großem Objektabstand bedeuten, dass Brennweite und Bildabstand so zu wählen sind, dass für den großen Objektabstand die geometrische Abbildungsbedingung erreicht wird. Somit kann bei großer Entfernung der kleinste Spot-Durchmesser in der Bildebene erreicht werden ("die Abbildung ist scharf"). Durch die Festlegung der Brennweite und Bildebene kann die Anzahl von Pixeln, die im Falle eines näher liegenden Zielobjektes beleuchtet werden, wesentlich größer sein als bei einem weit entfernten Zielobjekt. Bei einem näher liegenden Zielobjekt kann die zurücklaufende Messstrahlung nicht mehr scharf abgebildet werden, so dass der beleuchtete Bereich der Detektionsfläche entsprechend größer werden kann.

Da die Detektionssignale einzelner Pixel unabhängig voneinander ausgewertet werden können, können die Empfangseinrichtung und die Auswerteeinrichtung dazu ausgelegt werden, eine Entfernung zwischen der Messvorrichtung und dem Zielobjekt basierend auf einer Auswertung von Detektionssignalen ausschließlich von Pixeln, auf die Licht der von der Sendeeinrichtung beleuchteten Fläche des Zielobjektes rückgestrahlt wird, zu ermitteln. Mit anderen Worten kann die Auswerteeinrichtung beispielsweise zunächst in einer Vorabmessung ermitteln, welche der Pixel der Detektionsfläche tatsächlich Messstrahlung der Sendeeinrichtung empfangen und welche Pixel lediglich Hintergrundstrahlung detektieren, und kann anschließend für die tatsächliche Entfernungsbestimmung lediglich die Detektionssignale der von der Messstrahlung beleuchteten Pixel verwenden. Hierdurch kann ein Signal-Rausch-Verhältnis erheblich erhöht werden.
Um die Entfernung zwischen der Messvorrichtung und dem Zielobjekt ermitteln zu können, kann die Auswerteeinrichtung wenigstens eine Entfernungsbestimmungseinrichtung (teilweise auch als "Binning-Schema" bekannt) aufweisen. Die Entfernungsbestimmungseinrichtung kann dazu ausgelegt sein, eine Flugdauer von Messstrahlung zwischen einer Aussendung von der Sendeeinrichtung bis zu einer Detektion der von dem Zielobjekt zurücklaufenden Messstrahlung auf der Detektionsfläche zu ermitteln und daraus eine Entfernung zu bestimmen. Die Entfernungsbestimmungseinrichtung kann hierzu eine von der Sendeeinrichtung bereitgestellte Information über die zeitliche Modulation ausgesendeter Messstrahlung mit von der Empfangseinrichtung bereitgestellten Detektionssignalen vergleichen. Im Fall einer periodisch modulierten ausgesendeten Messstrahlung kann beispielsweise aus einem Phasenunterschied zwischen einem Aussendungssignal und einem Detektionssignal eine entsprechende Entfernung ermittelt werden.
Prinzipiell kann eine einzige Entfernungsbestimmungseinrichtung für die Ermittlung einer Entfernung zwischen der Messvorrichtung und dem Zielobjekt genügen. Um die Anzahl von Entfernungsbestimmungseinrichtungen gering zu halten, kann es vorteilhaft sein, die Detektionssignale einzelner Pixel oder einer Gruppe von Pixeln zum Beispiel mit Hilfe eines Multiplexers nacheinander an eine Entfernungsbestimmungseinrichtung zu leiten. Aufgrund einer derart sequentiellen Verarbeitung von Detektionssignalen kann es zu einer Verlängerung einer Gesamtmessdauer kommen. Alternativ kann jedem der Pixel eine eigene Entfernungsbestimmungseinrichtung zugeordnet sein. In diesem Fall kann aus jedem der Detektionssignale der Vielzahl von Pixeln jeweils eine Entfernung bestimmt werden, möglicherweise zeitlich parallel zueinander, und aus der Vielzahl von bestimmten Entfernungen kann schließlich beispielsweise durch Mittelung eine letztendlich zu bestimmende Entfernung zwischen der Vorrichtung und dem Zielobjekt ermittelt werden. Allerdings kann es hierzu notwendig sein, eine sehr große Anzahl von Entfernungsbestimmungseinrichtungen in der Messvorrichtung vorzusehen, was den Aufbau und die Fertigung der Messvorrichtung kompliziert gestalten kann.
Sozusagen als Mittelweg zwischen diesen beiden extremen Alternativen kann eine Mehrzahl von Pixeln mit einer Entfernungsbestimmungseinrichtung verbunden sein und die Entfernungsbestimmungseinrichtung kann dazu ausgelegt sein, die Entfernung basierend auf Detektionssignalen der Mehrzahl von Pixeln zu bestimmen. Die Auswerteeinrichtung kann eine Mehrzahl von Entfernungsbestimmungseinrichtungen aufweisen und dazu ausgelegt sein, die Entfernung zwischen der Messvorrichtung und dem Zielobjekt basierend auf den von den Entfernungsbestimmungseinrichtungen bestimmten Entfernungen zu bestimmen, beispielsweise durch Mittelwertbildung.
Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Erfindungsgemäss werden, anstatt einer einzigen großflächigen SPAD mehrere kleinere SPADs innerhalb eines Pixels vorgesehen und beispielsweise werden Detektionssignale von in einem einzelnen Pixel enthaltenen SPADs mit Hilfe eines Kombinierers kombiniert. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Wenn beispielsweise im Lichtweg zwischen der Sendeeinrichtung und der Empfangseinrichtung eine nicht-automatisch-fokussierende Optik, die für weitentfernte Zielobjekte abbildend bzw. optimal fokussierend ausgelegt ist, angeordnet ist, kann für weit entfernte Zielobjekte die zurücklaufende Messstrahlung mit einem kleinen Fleck- bzw. Spot-Durchmesser fokussiert werden. Innerhalb eines solchen Bereiches der Detektionsfläche kann es vorteilhaft sein, dass jedes der Pixel lediglich eine einzige SPAD oder nur wenige SPADs enthält. Wenn mit einer solchen Fix-Fokus-Messvorrichtung näher liegende Zielobjekte anvisiert werden, kann die zurücklaufende Messstrahlung auf der Detektionsfläche nicht als kleiner Fleck fokussiert werden, sondern trifft eventuell defokussiert auf eine größere Teilfläche der Detektionsfläche. Insgesamt werden in diesem Fall dann mehr Pixel beleuchtet als im Fall eines weit entfernt liegende Zielobjektes. Daher kann es vorteilhaft sein, in Randbereichen des beleuchteten Teilbereiches der Detektionsfläche jeweils eine Mehrzahl von SPADs zu einem einzelnen Pixel (oder "sub-array" oder "cluster" von SPADs) zusammenzufassen.

Beispielsweise kann die Sendeeinrichtung und die Empfangseinrichtung nebeneinander entlang einer Parallaxenachse angeordnet sein. Solche sogenannte biaxiale Messsysteme können den Vorteil haben, dass keine aufwändige Strahlungsteilung zur Selektion des rücklaufenden Messstrahls notwendig ist. Der von der Sendeeinrichtung ausgestrahlte und von dem Zielobjekt zurücklaufende Messstrahl kann in diesem Fall je nach Entfernung des Zielobjektes an einer anderen Stelle entlang der Parallaxenachse auf die Detektionsfläche treffen und unterschiedliche Querschnitte aufweisen. In diesem Fall kann es vorteilhaft sein, die Anzahl von SPADs, die in einem Pixel enthalten sind, abhängig vom Ort des Pixels entlang der Parallaxenachse zu variieren. Insbesondere kann es vorteilhaft sein, die Anzahl von SPADs, die in einem Pixel enthalten sind, in Pixeln nahe der Sendeeinrichtung kleiner zu wählen als in Pixeln entfernt von der Sendeeinrichtung.

Alternativ können die Sendeeinrichtung und die Empfangseinrichtung koaxial zueinander angeordnet sein. Bei einer solchen monoaxialen Messvorrichtung kann beispielsweise mit Hilfe semitransparenter Spiegel erreicht werden, dass das Zentrum des von der rücklaufenden Strahlung beleuchteten Bereichs der Detektionsfläche unabhängig von der Entfernung des Zielobjekts weitgehend orts-konstant bleibt. Allerdings kann der Querschnitt des beleuchteten Bereichs auf der Detektionsfläche weiterhin von der Entfernung des Zielobjektes abhängen. Bei weit entfernten Zielobjekten und einer Optik mit weiter Brennweite kann es zu einem kleinen beleuchteten Fleck kommen, bei näher liegenden Zielobjekten zu einem größeren beleuchteten Fleck. Es kann vorteilhaft sein, die Anzahl von SPADs, die in einem Pixel enthalten sind, in Pixeln nahe dem Zentrum der Detektionsfläche kleiner zu wählen als in Pixeln entfernt von dem Zentrum der Detektionsfläche.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.
Fig. 1 zeigt eine Messvorrichtung zur optischen Entfernungsmessung gemäß einer Ausführungsform der vorliegenden Erfindung.
Fig. 2 zeigt beispielhaft eine Abhängigkeit einer Zählrate einer SPAD abhängig von einer Rate absorbierter Photonen pro Pixel.
Fig. 3 zeigt eine schematisierte Schaltung von zwei SPADs, die mit einem Kombinierer verbunden sind, für eine Messvorrichtung gemäß einer Ausführungsform der vorliegenden Erfindung.
Fig. 4 veranschaulicht ein Ansprechverhalten von drei SPADs und einem damit verbundenen Bus unter Berücksichtigung von Totzeiten für eine Messvorrichtung gemäß einer Ausführungsform der vorliegenden Erfindung.
Fig. 5 zeigt beispielhaft eine Gesamtzählrate an einem mit mehreren SPADs verbundenen Bus in Abhängigkeit einer Rate absorbierter Photonen pro Pixel.
Fig. 6 zeigt eine Draufsicht auf eine Detektionsfläche einer Empfangseinrichtung für eine Messvorrichtung gemäß einer Ausführungsform der vorliegenden Erfindung.
Fig. 7 zeigt eine Draufsicht auf eine alternative Detektionsfläche einer Empfangseinrichtung für eine Messvorrichtung gemäß einer Ausführungsform der vorliegenden Erfindung.
Fig. 8 zeigt eine einzelne SPAD, die mit einer Entfernungsbestimmungseinrichtung verbunden ist.
Fig. 9 zeigt zwei SPADs, die über einen Multiplexer mit einer Entfernungsbestimmungseinrichtung verbunden sind.
Fig. 10 zeigt zwei Pixel mit jeweils 9 SPADs, die über Kombinierer und Multiplexer mit einer Entfernungsbestimmungseinrichtung verbunden sind.
Fig. 11 zeigt eine Detektionsfläche einer Empfangseinrichtung mit Pixeln, bei denen die Anzahl von in den Pixeln enthaltenen SPADs ortsabhängig variiert und welche über Kombinierer und Multiplexer mit mehreren Entfernungsbestimmungseinrichtungen verbunden sind.

### DETAILIERTE BESCHREIBUNG VON AUSFÜHRUNGSFORMEN

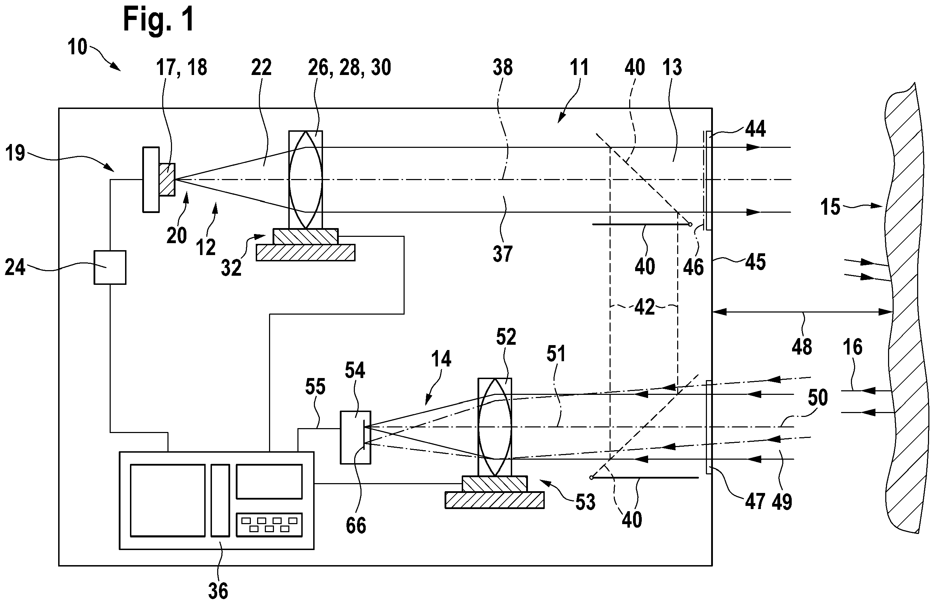

In Fig. 1 ist in schematischer Weise eine erfindungsgemäße Messvorrichtung 10 zur optischen Entfernungsmessung mit den wichtigsten Komponenten zur Beschreibung ihrer Funktion dargestellt.

Die Messvorrichtung 10 weist ein Gehäuse 11 auf, in dem eine Sendeeinrichtung 12 zur Aussendung optischer Messstrahlung 13 sowie eine Empfangseinrichtung 14 zur Detektion von von einem Zielobjekt 15 zurücklaufender Messstrahlung 16 angeordnet sind.

Die Sendeeinrichtung 12 beinhaltet eine Lichtquelle, die im dargestellten Ausführungsbeispiel durch eine Halbleiter-Laserdiode 18 realisiert ist. Die Laserdiode 18 sendet einen Laserstrahl 20 in Form eines für das menschliche Auge sichtbaren Lichtbündels 22 aus. Die Laserdiode 18 wird dazu über ein Steuergerät 24 betrieben, das durch eine entsprechende Elektronik eine zeitliche Modulation eines elektrischen Eingangssignals 19 der Laserdiode 18 erzeugt. Durch eine derartige Modulation des Diodenstromes lässt sich erreichen, dass die optische Messstrahlung 13, welche zur Entfernungsmessung genutzt wird, ebenfalls in gewünschter Weise zeitlich in ihrer Intensität moduliert wird.

Das Laserstrahlbündel 20 durchläuft anschließend eine Kollimationsoptik 26 in Form eines Objektivs 28, das in Fig. 1 in vereinfachter Weise in Form einer einzelnen Linse dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken, ermöglicht. Alternativ kann die Kollimationsoptik 26 jedoch auch bereits Bestandteil der Laserdiode 18 sein bzw. fest mit dieser verbunden sein.

Nach Durchlaufen des Objektivs 28 ergibt sich ein beispielsweise Amplitudenmoduliertes Signal der Messstrahlung 13 in Form eines nahezu parallelen Lichtbündels 37, das sich entlang einer optischen Achse 38 der Sendeeinheit 12 ausbreitet.

In der Sendeeinrichtung 12 kann sich zudem noch eine vorzugsweise schaltbare Strahlumlenkung 40 befinden, die es gestattet, die Messstrahlung 13 ganz oder teilweise unter Umgehung des Zielobjektes 15 direkt, das heißt geräteintern, auf die Empfangseinrichtung 14 umzulenken. Auf diese Weise kann eine geräteinterne Referenzstrecke 42 erzeugt werden, die eine Kalibrierung bzw. einen Abgleich der Messvorrichtung gestattet.

Wird mit der Messvorrichtung 10 eine Entfernungsmessung durchgeführt, verlässt die Messstrahlung 13 das Gehäuse 11 der Messvorrichtung durch ein optisches Fenster 44 in der Stirnwand 45 der Messvorrichtung 10. Die Öffnung des optischen Fensters 44 kann beispielsweise durch einen Shutter 46 gesichert sein. Zur eigentlichen Messung wird die Messvorrichtung 10 dann auf ein Zielobjekt 15 hin ausgerichtet, dessen Entfernung 48 zur Messvorrichtung 10 ermittelt werden soll. Das an dem gewünschten Zielobjekt 15 reflektierte oder gestreute Signal 16 bildet zurücklaufende optische Messstrahlung 16 in Form eines zurücklaufenden Strahlenbündels 49 bzw. 50, das zu einem gewissen Teil wieder in die Messvorrichtung 10 zurückgelangt.

Durch ein Eintrittsfenster 47 an der Stirnseite 45 der Messvorrichtung 10 wird die zurücklaufende Messstrahlung 16 in die Messvorrichtung 10 eingekoppelt und trifft dann, wie in Fig. 1 dargestellt, auf eine Empfangsoptik 52.

In Fig. 1 sind exemplarisch zur Verdeutlichung zwei zurücklaufende Messstrahlenbündel 49 bzw. 50 für zwei unterschiedliche Zielobjektentfernungen 48 eingezeichnet. Für große Objektentfernungen, wobei groß als groß gegenüber der Brennweite der Empfangsoptik 52 interpretiert werden kann, fällt die vom Zielobjekt 15 zurücklaufende optische Messstrahlung 16 annähernd parallel zur optischen Achse 51 der Empfangseinrichtung 14 ein. Dieser Fall ist im Ausführungsbeispiel der Fig. 1 durch das Messstrahlenbündel 49 repräsentiert. Mit kleiner werdender Objektentfernung wird die in die Messvorrichtung einfallende zurücklaufende Messstrahlung 16 aufgrund einer Parallaxe immer mehr gegenüber der optischen Achse 51 der Empfangseinrichtung 14 geneigt. Als Beispiel für ein solches rücklaufendes Messstrahlenbündel im Nahbereich der Messvorrichtung ist in Fig. 1 das Strahlenbündel 50 eingezeichnet.

Die Empfangsoptik 52, die in Fig. 1 ebenfalls nur schematisch durch eine einzelne Linse symbolisiert ist, fokussiert das Strahlenbündel der zurücklaufende Messstrahlung 16 auf die Detektionsfläche 66 eines in der Empfangseinrichtung 14 vorgesehenen Empfangsdetektors 54. Der Detektor 54 weist zur Detektion der optischen Messstrahlung eine Vielzahl von Pixeln auf. Jedes der Pixel weist mindestens eine lichtempfindliche SPAD auf. Durch die in der Detektionsfläche 66 vorgesehenen SPADs, die einzeln oder in Gruppen zusammengefasst in Pixeln Matrix-artig angeordnet und mit einer Auswerteeinrichtung 36 verbunden sind, wird die einfallende zurücklaufende Messstrahlung 16 in ein elektrisches Signal 55 umgewandelt und der weiteren Auswertung in der Auswerteeinrichtung 36 zugeführt. Das elektrische Signal 55 kann dabei aufgrund inhärenter Eigenschaften der SPADs als digitales Signal angesehen werden, das eine Zählrate von auf die jeweiligen Pixel der Detektionsfläche 66 auftreffender Photonen wiedergibt.

Die von einer einzelnen SPAD oder einer Kombination von SPADs generierten Detektionssignale können einer oder mehreren in einer Auswerteeinrichtung 36 enthaltenen Entfernungsbestimmungseinrichtung(en) zugeführt werden. Die Entfernungsbestimmungseinrichtung kann die Detektionssignale aufsummieren und daraus ein Signal erzeugen, das einer zeitabhängigen Intensität des auf die jeweiligen SPADs auftreffenden Lichtsignals bzw. der Lichtintensität entspricht. Indem dieses Signal in Relation zu einem Anregungssignal gesetzt wird, das den zeitlichen Verlauf der von der Sendeeinrichtung emittierten Photonenrate angibt, kann auf eine Photonenflugzeit von der Sendeeinrichtung hin zu dem Zielobjekt und wieder zurück zu der Empfangseinrichtung geschlossen werden. Falls die Sendeeinrichtung das ausgesendete Licht beispielsweise sinusartig periodisch moduliert, kann eine Flugzeit aus einem Phasenunterschied zwischen der ausgesendeten und der detektierten Messstrahlung ermittelt werden.

In der Optoelektronik wird der Begriff "single photon avalanche diode" (SPAD), welcher manchmal auch als Einzelphotonenlawinendiode, Geiger-Modus-Lawinenfotodiode oder G-APD bezeichnet wird, für eine Klasse von Festkörperfotodetektoren verwendet, die auf einem in Rückwärtsrichtung vorgespannten pn-Übergang beruhen, in dem möglicherweise ein einzelner, durch ein Photon generierter Ladungsträger aufgrund eines Stoßionisationsmechanismus einen lawinenartigen Strom auslösen kann. Ein grundsätzlicher Unterschied zwischen einer SPAD und einer herkömmlichen Lawinenfotodiode (APD) kann darin liegen, dass die SPAD speziell dafür ausgelegt sein kann, bei einer Vorspannung in Umkehrrichtung zu arbeiten, die oberhalb der Durchbruchspannung (breakdown voltage) der Diode liegt. Dieser Betriebsmodus wird auch als Geiger-Modus bezeichnet, in Analogie zu einem Geiger-Zähler. Bei derart hohen Vorspannungen kann das elektrische Feld innerhalb des pn-Übergangs derart stark sein, dass ein einzelner in die Verarmungszone injizierter Ladungsträger einen sich selbst erhaltenden lawinenartigen Strom auslösen kann. Der Strom kann innerhalb eines Zeitraums von weniger als 1 ns auf ein makroskopisches Niveau beispielsweise im Bereich von mA ansteigen. Der Strom kann aufrechterhalten bleiben, bis die Lawine durch Absenken der Vorspannung auf ein Niveau unterhalb der Durchbruchspannung gedämpft ("quenched") wird und auf diese Weise der Lawinenstrom abgebrochen wird. Eine einfache Dämpfungsschaltung kann hierbei aus einem einfachen Widerstand bestehen, der zu der SPAD in Serie geschaltet ist. Der Lawinenstrom dämpft sich dabei einfach selbst aufgrund des entstehenden Spannungsabfalls über den hochohmigen Serienwiderstand. Nachdem der Lawinenstrom abgedämpft wurde, erholt sich die Vorspannung der SPAD und die SPAD ist wieder in der Lage, erneut ausgelöst zu werden. Während der Lawinenstrom fließt und während des Abdämpfens und der anschließenden Erholung der Vorspannung kann die SPAD jedoch während einer Totzeit τ nicht in der Lage sein, weitere Photonen zu detektieren.

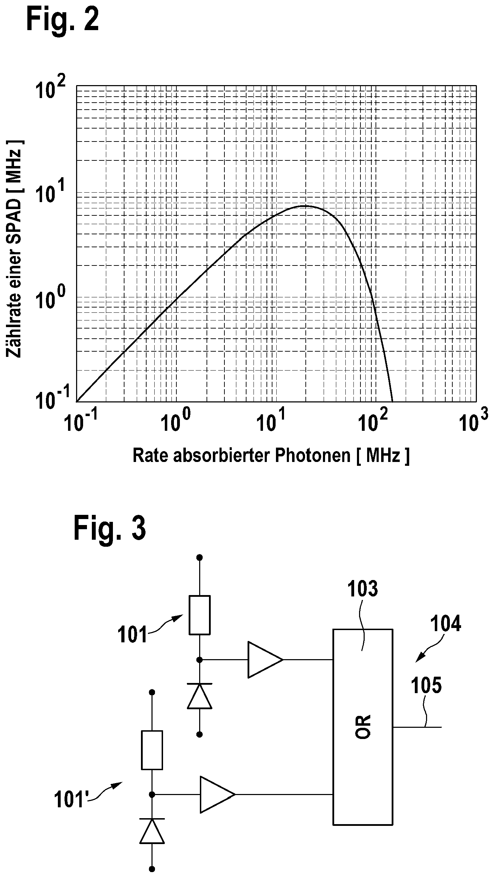

Wie in Fig. 2 dargestellt, kann daher die von einer einzelnen SPAD ermittelte Zählrate bei einer geringen Rate absorbierter Photonen in etwa proportional zu der Photonenabsorptionsrate sein. Allerdings beginnt die Zählrate bei einer Photonenabsorptionsrate von etwas weniger als der inversen Totzeit 1/τ an, zu sättigen. Bei noch höheren Photonenabsorptionsraten nimmt die Zählrate sogar ab, bis sie oberhalb einer Photonenabsorptionsrate beispielsweise im Bereich oberhalb von 10² MHz komplett zusammenbricht, da bei derart hohen Photonenabsorptionsraten die SPAD bereits schon wieder ausgelöst wird, bevor sich die Spannung vollständig erholt hat und es somit zu keiner Unterbrechung des Lawinenstromes kommen kann. Die Effizienz eines paralysierbaren Detektors wie einer SPAD nimmt somit bei hohen Photonenströmen stark ab, sobald die von der SPAD absorbierte Photonenrate groß gegenüber einer inversen Totzeit der SPAD wird.

Mit der Größe einer einzelnen SPAD ergibt sich dadurch eine obere Grenze für die maximal detektierbare Intensität (Leistung pro Fläche) bzw. den maximal detektierbaren Photonenstrom bzw. Photonenrate. Die pro Detektor absorbierte Photonenrate kann gesenkt werden, indem die Lichtleistung über mehrere SPADs verteilt wird. Damit kann die Detektionseffizienz bei hohen Lichtleistungen, wie sie insbesondere bei kurzen Messentfernungen auftreten kann, verbessert werden. Unter der Lichtleistung kann hierbei die gesamte von der Empfangslinse erfasste Lichtleistung der vom Zielobjekt zurücklaufenden Messstrahlung verstanden werden.

Fig. 3 zeigt zwei SPADs 101, 101', deren Detektionssignale jeweils an ein ODER-Gatter 103 weitergeleitet werden. Das ODER-Gatter 103 wirkt als Kombinierer 104, indem es sowohl Detektionssignale von der ersten SPAD 101 als auch Detektionssignale von der zweiten SPAD 101' aufnimmt und an einem Ausgang 105 ein kombiniertes Signal dieser Eingangssignale ausgibt.

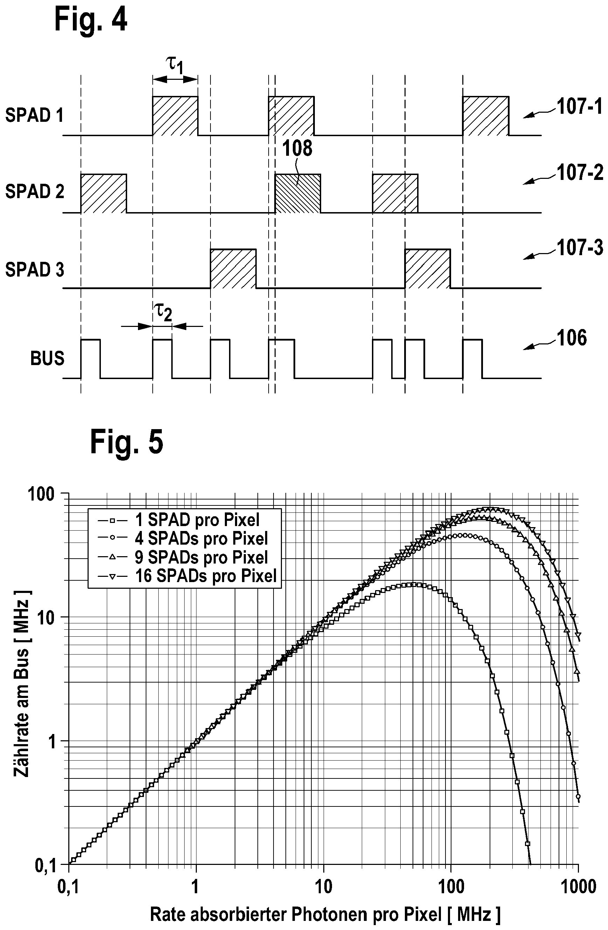

Komplizierter kann die Situation bei Verwendung eines Kombinierers sein, der die Detektionssignale mehrerer einzelner SPADs auf einem Bus kombiniert. Die Totzeit, die dem Bus zuzuordnen ist, kann zu zusätzlichen Effizienzeinbußen verglichen mit einer vollständig parallelen Auswertung einer Gesamtheit von SPADs führen. Einen möglichen Zusammenhang zeigt Fig. 4. Hier wird die Ereignisrate 106 an dem Bus in Abhängigkeit von einer Rate 107-1, 107-2, 107-3 absorbierter Photonen in drei SPADs dargestellt. Die Totzeit τ₁ einer SPAD beträgt dabei jeweils 50 ns, die Totzeit τ₂ des Busses beträgt 10 ns. Es ist zu erkennen, dass beispielsweise das Absorptionsereignis 108 eines Photons durch die zweite SPAD an dem Bus nicht als separates Zählsignal ausgegeben wird, weil es in die Totzeit τ₂ des Busses fällt.

Indem die von den einzelnen SPADs generierten digitalen Signale mittels eines Pulsverkürzers zeitlich verkürzt werden, kann eine effektive Totzeit eines Gesamtsystems, dass aus mehreren mit einem Bus verbundenen SPADs besteht, verkürzt werden. Die effektive Totzeit des Gesamtsystems ergibt sich dabei aus einer Kombination der Totzeit der einzelnen SPADs und der Dauer der von den Verkürzern verkürzten Signale.

In der in Fig. 5 dargestellten Kurve sind die Zählraten am Bus in Abhängigkeit einer Rate absorbierter Photonen pro Pixel für eine Kombination von einer, vier, neun bzw. sechzehn SPADs beispielhaft dargestellt. Die SPAD-Totzeit τ₁ beträgt hierbei 50 ns, die Bus-Totzeit τ₂ beträgt 10 ns. Aufgrund der Totzeit des Busses strebt das Maximum der Kurvenschar mit steigender Anzahl kombinierter SPADs gegen einen Grenzwert (inverse Bus-Totzeit). Es wird deutlich, dass die Totzeit des Busses bzw. des Kombinierers eine Optimierungsgröße darstellt. Im allgemeinen kann eine derartige Bus-Totzeit deutlich kleiner sein als die Totzeit einer SPAD, so dass das Kombinieren von SPAD-Detektionssignalen zu Zählraten führen kann, die höher sind als die Zählraten einer einzelnen SPAD. Ohne einen Kombinierer bzw. einen Bus können diese höheren Zählraten nur durch vollständig parallele Auswertung mit zusätzlichen Entfernungsbestimmungseinrichtungen realisiert werden.

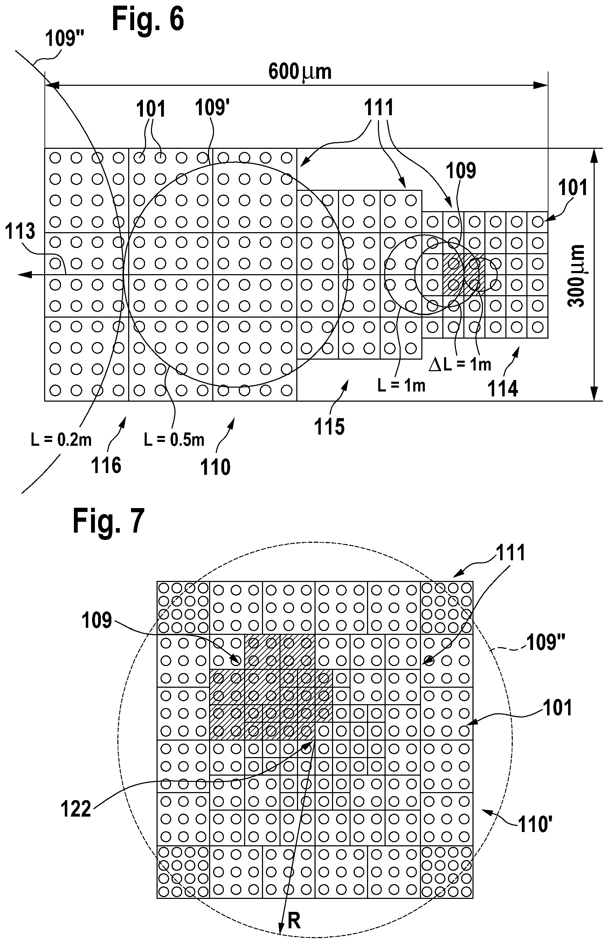

Fig. 6 zeigt schematisch eine Detektionsfläche 110 einer Detektionseinrichtung 54 für eine Laser-Entfernungsmessvorrichtung mit unkorrigierter Parallaxe. Hierbei sind kreisförmige Laserflecke 109 oder Laserspots, deren Durchmesser abhängig von einer Entfernungen L zwischen der Messvorrichtung und dem Zielobjekt variiert, auf der Detektionsfläche 110 eingezeichnet. Es wurde hierbei eine ideale Linse mit einer Brennweite f = 30 mm, einem Durchmesser d = 4 mm und einer Parallaxe von 5 mm für den Fall optimaler Justage auf große Entfernungen angenommen. Die Laserstrahlung wurde dabei mit einer Divergenz von 1 mrad angenommen. Es ist bei dieser Ausgestaltung der Detektionsfläche 110 vorteilhaft, dass die Größe der Pixel 111 bzw. die Anzahl von SPADs 101 innerhalb jeweiliger Pixel 111 entlang der Parallaxenachse 113 zunimmt. Die Parallaxenachse wird hierbei als die Schnittgerade zwischen einer Detektionsflächenebene und einer Ebene, die von der optischen Achse der Empfangsoptik und der Laserstrahlachse der Entfernungsmessvorrichtung aufgespannt wird, angenommen. Es ist zu erkennen, dass in einem ersten Bereich 114, in dem der Laserfleck 109 auftrifft, wenn der Laserstrahl von einem weit entfernten Zielobjekt zurückgestrahlt wird, kleine Pixel vorgesehen sind, die jeweils nur eine einzige SPAD enthalten. In einem Bereich 115, in dem der Laserfleck 109' auftrifft, wenn das Zielobjekt etwa 0,5 bis 1 m entfernt ist, sind größere Pixel mit jeweils vier SPADs vorgesehen. In einem weiteren Bereich 116, in dem der Laserfleck 109" für den Fall sehr naher Zielobjekte auftrifft, sind besonders große Pixel mit 8 bzw. 16 SPADs vorgesehen. Die Empfangsoptik ist dabei so optimiert, dass die bestmögliche Abbildungsqualität, das heißt der kleinstmögliche Laserfleckdurchmesser auf der Detektionsfläche, bei der größten Entfernung des Zielobjekts erreicht wird.

Bei großen Entfernungen ist der Laserfleck 109 aufgrund der scharfen Abbildung verhältnismäßig klein. Gleichzeitig ist die aus zurücklaufender Mess- und Hintergrundstrahlung zusammengesetzte Intensität des auftreffenden Lichtes aufgrund des geringen Anteils der Messstrahlung von dem weit entfernten Zielobjekt verhältnismäßig gering. Bei näher positionierten Zielobjekten wird insgesamt mehr Messstrahlung vom Zielobjekt zurück zur Detektionsfläche 110 reflektiert bzw. gestreut. Gleichzeitig wird die Messstrahlung durch die Fix-Fokus-Empfangsoptik nicht mehr scharf auf die Detektionsfläche 110 abgebildet.

In Summe ergibt sich aus einer geometrischen Betrachtung für einen LaserEntfernungsmesser mit leicht divergentem Laser-Strahl und Fix-Fokus-Empfangsoptik für den Anteil der empfangenen Laserstrahlung bei großen Entfernungen eine quadratisch über der Entfernung abfallende und bei geringen Entfernungen eine über der Entfernung konstante Licht-Intensität in der Detektorebene. Der Intensitätsanteil der Hintergrundstrahlung ist hingegen in erster Näherung entfernungsunabhängig.

Mit einer wie in Fig. 6 dargestellten ortsabhängigen Ausgestaltung der Größe der in der Detektionsfläche 110 enthaltenen Pixel 101 kann zum einen erreicht werden, dass sowohl bei großen Entfernungen des Zielobjektes als auch bei kleinen Entfernungen des Zielobjektes ein Laserfleck 109 jeweils auf eine Mehrzahl von Pixeln 111 trifft und von diesen ausgewertet werden kann. Die Größe der aktiven Detektionsfläche kann dabei optimal an die Größe des Laserflecks angepasst und somit das Signal-Rausch-Verhältnis optimiert werden. Zum anderen kann mit einer solchen ortsabhängigen Ausgestaltung auch der Dynamik-Bereich der SPADs optimal ausgenutzt werden, da die Lichtintensität des auftreffenden Lichtes (Laser- und Hintergrund-Anteil) bei großen Entfernungen geringer ist als bei kleinen Entfernungen. Bei den Detektorflächen, die nur bei geringen Entfernungen mit empfangener Messstrahlung beaufschlagt werden, kann daher die Fläche der einzelnen SPADs reduziert werden. In den Detektorbereichen, in denen die Intensität der empfangenen Messstrahlung nahezu konstant bleibt, kann die Anzahl von in den einzelnen Pixeln 111 enthaltenen SPADs 101 bei gleichbleibender SPAD-Fläche vergrößert werden.

Fig. 7 zeigt eine Ausführungsform einer Detektionsfläche 110' für einen koaxialen Laserentfernungsmesser oder einen Laserentfernungsmesser mit korrigierter Parallaxe. Eine solche Korrektur kann mit Hilfe eines Nahbereichselementes oder alternativer, bekannter Methoden erreicht werden. In einem solchen Fall dominiert im Wesentlichen der Abbildungsfehler durch die endliche Schärfentiefe der Empfangsoptik, so dass eine konzentrische Anordnung der Pixel gleicher Größe vorteilhaft ist. Ein von einem weit entfernten Zielobjekt zurücklaufender Laserstrahl wird gut fokussiert und erzeugt einen relativ kleinen Laserfleck 109 in der Nähe des Zentrums 122 der Detektionsfläche 110', das heißt in der Nähe des Durchstoßpunktes der optischen Achse der Empfangsoptik durch die Detektionsflächenebene. Ein von einem näher liegenden Zielobjekt zurücklaufender Laserstrahl erzeugt einen Laserfleck 109" mit wesentlich größerem Durchmesser. Die Pixel 111 weisen in der Nähe des Zentrums 122 eine geringere Fläche und eine geringere Anzahl von darin enthaltenen SPADs 101 auf als entfernt vom Zentrum 122 der Detektionsfläche 110', das heißt am Rand der Detektionsfläche.

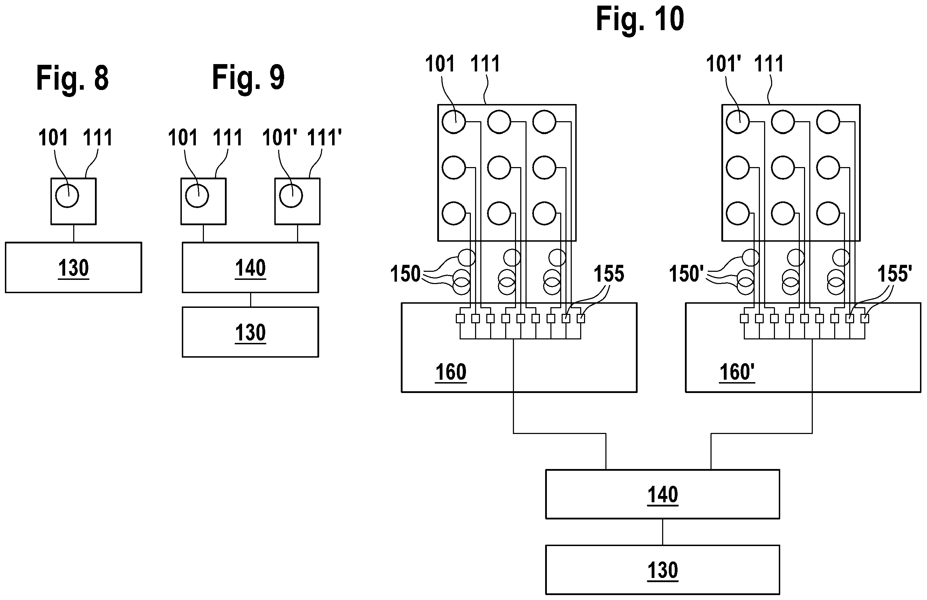

In den Fig. 8 bis 10 sind einzelne Elemente, wie sie zur Realisierung einer Empfangseinrichtung gemäß Ausführungsformen der vorliegenden Erfindung eingesetzt werden, als Blockschema dargestellt.

Fig. 8 zeigt ein Pixel 111 mit einer einzelnen SPAD 101. Das Pixel ist mit einer Entfernungsbestimmungseinrichtung 130 verbunden.

Fig. 9 zeigt zwei Pixel 111, 111' mit jeweils einer SPAD 101, 101'. Die Pixel 111, 111' sind mit einem Multiplexer 140 verbunden, der die von den Pixeln 111, 111' gelieferten Detektionssignale selektiv an eine Entfernungsbestimmungseinrichtung 130 weiterleitet.

In Fig. 10 ist eine Anordnung von zwei Pixeln 111, 111' mit jeweils neun SPADs 101, 101' dargestellt. Die Detektionssignale von den einzelnen SPADs 101, 101' werden, gegebenenfalls nach einer durch zusätzliche Verzögerungselemente 150, 150' bewirkten zeitlichen Verzögerung, jeweils an einen Kombinierer 160, 160' weitergeleitet. Die Verzögerung kann der Kompensation von Laufzeitunterschieden und damit der zeitlichen Synchronisation der SPADs eines Pixels oder verschiedener Pixel dienen. In den Kombinierern 160, 160' werden die Detektionssignale miteinander kombiniert. Zusätzlich können die von den SPADs generierten Signale mit Hilfe von Pulsverkürzern 155, 155' zeitlich verkürzt werden. Die kombinierten Detektionssignale werden von den Kombinierern 160, 160' an einen Multiplexer 140 und von dort aus weiter an eine Entfernungsbestimmungseinrichtung 130 geleitet.

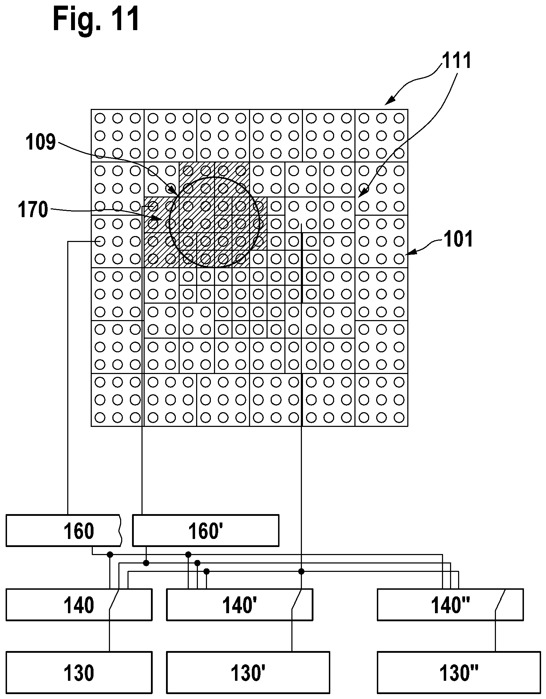

Fig. 11 zeigt eine spezielle Ausführungsform für eine Entfernungsmessvorrichtung mit korrigierter Parallaxe unter Verwendung solcher Elemente für N = 92 Pixel 111. Hierbei weisen 48 Pixel lediglich eine einzelne SPAD auf, 24 Pixel weisen jeweils vier SPADs in einer 2x2-Anordnung auf und 20 Pixel weisen jeweils 9 SPADs in einer 3x3-Anordnung auf. Jedes Pixel 111 mit mehr als einer SPAD 101 ist genau mit einem Kombinierer 160, 160' verbunden. Es gibt demnach 44 Kombinierer 160. Die Ausgänge der Pixel 111 mit nur einer SPAD bzw. der Kombinierer 160 sind mit Eingängen von K Multiplexern 140 verbunden. Die Ausgänge der Multiplexer 140 sind wiederum mit M Entfernungsbestimmungseinrichtungen 130 verbunden. Es gilt dabei weder notwendigerweise M = K noch M = N. Exemplarisch sind die Verbindungen für drei Pixel 111 verschiedener Größe und SPAD-Anzahl dargestellt. Eine in Fig. 11 schraffiert dargestellte Fläche gibt eine effektive Detektorfläche 170 an, die diejenigen Pixel 111 umfasst, die tatsächlich vom Laserlicht des Laserflecks 109 beleuchtet werden und anhand derer eine Entfernungsmessung zu dem Zielobjekt durchgeführt werden kann.

Abschließend sollen Aspekte und Vorteile von Ausführungsformen der Erfindung noch einmal mit anderen Worten zusammengefasst werden:
Eine Ausführungsform der Erfindung beruht auf dem Kerngedanken, die Art der Anordnung einzelner SPADs in Pixeln, deren Signale kombiniert werden, bevor sie einer zeitlichen Auswerteeinheit (das heißt einer Entfernungsbestimmungseinrichtung/einem Binning-Schema) zur weiteren Auswertung zugeführt werden, in vorteilhafter Weise auszugestalten. Die Menge an SPADs, deren Signale mittels eines Kombinierers zusammengefasst werden, bildet dabei ein Pixel.

Die einzelnen Pixel können unabhängig voneinander betrieben werden. Insbesondere kann eine Phasen-Auswertung einer kontinuierlichen Welle oder alternativ eine Flugzeitauswertung eines Pulses für jedes einzelne Pixel ausgeführt werden.

Eine Kombination mehrerer SPADs zu Pixeln kann räumlich derart ausgestaltet werden, dass das Signal-Rausch-Verhältnis sowohl bei großen als auch bei kleinen Entfernungen insbesondere unter starker Hintergrundbeleuchtung mit wenigen Entfernungsbestimmungseinrichtungen optimiert werden kann. Erreicht werden kann dies über eine über die Detektionsfläche ortsabhängige Anpassung der Größe der Pixel bzw. der Anzahl von SPADs, die zu einem Pixel kombiniert werden.

Die speziell auf Erhöhung des Signal-Rausch-Verhältnisses bei einem Laserentfernungsmesser hin optimierte Art der Anordnung von wahlweise Pixeln mit nur einer SPAD oder Pixeln mit unterschiedlicher Größe und Anzahl von SPADs stellt eines der Unterscheidungsmerkmale sowohl zu herkömmlichen Laserentfernungsmessern als auch zu 3D-Kameras dar. Diese Anordnung kann die Anforderungen an eine Justage einer Optik innerhalb der Messvorrichtung senken und kann gleichzeitig zu einem optimierten Signal-Rausch-Verhältnis beitragen, auch wenn die Empfangseinrichtung nicht in der Bildebene der Optik liegt, wie dies zum Beispiel bei Fix-Fokus-Systemen auftreten kann.

Eine Detektionsfläche kann so groß dimensioniert sein, dass die Anforderungen an die Justage der Empfangsoptik verringert werden können. Außerdem kann der Einfluss optischer Abbildungsfehler, insbesondere der Fehler durch Defokussierung aufgrund zu geringer Schärfentiefe, minimiert werden. Dadurch können die Anforderungen an die optische Qualität der Empfangsoptik verringert werden.

Ein weiterer Vorteil kann die Optimierung des Signal-Rausch-Verhältnisses insbesondere bei großen Messentfernungen unter hohem Hintergrundlicht-Anteil sein. Dies kann dadurch erreicht werden, dass die effektive Detektionsfläche bei allen Entfernungen optimal an die Größe des tatsächlich abgebildeten Lasermessflecks in der Detektionsebene angepasst, das heißt minimiert werden kann. Nach abgeschlossener Messung können gezielt die Signale von ausschließlich denjenigen einzelnen SPADs bzw. Pixeln mit mehreren SPADs ausgewertet werden, die tatsächlich Laserstrahlung empfangen. Dadurch kann die effektive Detektionsfläche reduziert und der Rauschbeitrag des Hintergrundlichtes minimiert werden, was gleichbedeutend mit einer Verbesserung des Signal-Rausch-Verhältnisses sein kann.

Ein weiterer Vorteil kann darin bestehen, dass aufgrund der Zusammenfassung mehrerer SPADs innerhalb eines Pixels weniger Entfernungsbestimmungseinrichtungen als SPADs benötigt werden. Dies kann eine benötigte Chipfläche einer integrierten Schaltung reduzieren. Insbesondere bei Laserentfernungsmessern, die in der Regel mit einer festen Brennweite arbeiten, kann dieser Vorteil eine wichtige Rolle spielen, da der Laserfleckdurchmesser dann in Abhängigkeit von der Entfernung des Zielobjekts variieren kann. Fig. 6 verdeutlicht dies für ein System, bei dem der Parallaxen-Fehler nicht korrigiert ist. Um das Signal-Rausch-Verhältnis wie zuvor beschrieben durch Minimierung der effektiven Detektionsfläche zu optimieren, kann bei größeren Laserfleck-Durchmessern, das heißt in der Regel bei geringeren Entfernungen des Zielobjektes, dementsprechend auch nur eine geringere Auflösung des Detektors benötigt werden. Dieser Umstand lässt sich durch die ortsabhängige Kombination von SPADs zu Pixeln ausnutzen.

Da die effektive Detektionsfläche, das heißt die Fläche, die in der Auswertung der Messung berücksichtigt wird, in der Regel kleiner ist als die gesamte Detektionsfläche, kann die Anzahl benötigter Entfernungsbestimmungseinrichtungen noch weiter reduziert werden, indem zusätzlich zur Kombination von SPADs auch noch ein Multiplexen angewandt wird. Mit Hilfe vorläufiger Messungen können in diesem Fall die Laserstrahlung empfangenden Pixel zunächst identifiziert und anschließend für die eigentliche Messung auf die Entfernungsbestimmungseinrichtungen verteilt werden. Ist N die Gesamtzahl an Pixeln mit einer oder mehreren SPADs und M die Anzahl der zur Auswertung zur Verfügung stehenden Entfernungsbestimmungseinrichtungen, dann müssen maximal aufgerundet N/M vorläufige Messungen zur Identifizierung durchgeführt werden. Die Messaufgabe kann daher mit wenigen Messungen, im Idealfall mit einer einzigen Messung, durchgeführt werden.

Ein weiterer Vorteil kann darin liegen, dass einzelne Pixel unabhängig voneinander kalibriert werden können, zum Beispiel hinsichtlich eines Phasen-Offsets.

## Patentansprüche

1. Messvorrichtung (10) zur optischen Entfernungsmessung, insbesondere handgehaltene Messvorrichtung, aufweisend:
eine Sendeeinrichtung (12) zur Aussendung optischer Messstrahlung (13) auf ein Zielobjekt (15) hin;
eine Empfangseinrichtung (14) mit einer Detektionsfläche (110) zur Detektion von von dem Zielobjekt (15) zurücklaufender optischer Messstrahlung (16); und
eine Auswerteeinrichtung (36); wobei die Detektionsfläche (110) eine Vielzahl von Pixeln (111) aufweist,
wobei jedes Pixel (111) mindestens eine SPAD (101) aufweist, und wobei jedes der Vielzahl von Pixeln (111) mit der Auswerteeinrichtung (36) verbunden ist;
wobei die Sendeeinrichtung (12) und die Empfangseinrichtung (14) derart ausgelegt sind, dass von dem Zielobjekt (15) zurücklaufende optische Messstrahlung (16) eine Mehrzahl von Pixeln (111) gleichzeitig beleuchtet;
wobei die Auswerteeinrichtung (36) dazu ausgelegt ist, eine Entfernung (48) zwischen der Messvorrichtung (10) und dem Zielobjekt (15) basierend auf einer Auswertung von Detektionssignalen mehrerer Pixel (111) zu ermitteln, **dadurch gekennzeichnet, dass** wenigstens einige Pixel (111) jeweils eine Mehrzahl von SPADs (101) enthalten.

2. Messvorrichtung nach Anspruch 1, wobei die Auswerteeinrichtung (36) wenigstens eine Entfernungsbestimmungseinrichtung (130) aufweist, die dazu ausgelegt ist, eine Flugdauer von Messstrahlung (13, 16) zwischen einer Aussendung von der Sendeeinrichtung (12) bis zu einer Detektion von von dem Zielobjekt (15) zurücklaufender Messstrahlung (16) zu ermitteln und daraus eine Entfernung zu bestimmen.

3. Messvorrichtung nach Anspruch 2, wobei eine Mehrzahl von Pixeln (111) mit einer Entfernungsbestimmungseinrichtung (130) verbunden ist und die Entfernungsbestimmungseinrichtung (130) dazu ausgelegt ist, die Entfernung basierend auf Detektionssignalen der Mehrzahl von Pixeln (111) zu bestimmen.

4. Messvorrichtung nach Anspruch 2, wobei die Auswerteeinrichtung (36) eine Mehrzahl von Entfernungsbestimmungseinrichtungen (130) aufweist und die Auswerteeinrichtung (36) dazu ausgelegt ist, die Entfernung (48) zwischen der Messvorrichtung (10) und dem Zielobjekt (15) basierend auf den von den Entfernungsbestimmungseinrichtungen (130) bestimmten Entfernungen zu bestimmen.

5. Messvorrichtung nach einem der vorhergehenden Ansprüche, ferner aufweisend wenigstens einen Kombinierer (160), der dazu ausgelegt ist, Detektionssignale von SPADs (101), die in einem einzelnen Pixel (111) enthalten sind, zu kombinieren.

6. Messvorrichtung nach einem der vorhergehenden Ansprüche, ferner aufweisend wenigstens einen Pulsverkürzer, um ein von einer SPAD generiertes digitales Signal zeitlich zu verkürzen.

7. Messvorrichtung nach einem der vorhergehenden Ansprüche, wobei die Anzahl von SPADs (101), die in einem Pixel (111) enthalten sind, abhängig vom Ort des Pixels (111) innerhalb der Detektionsfläche (110) der Empfangseinrichtung (14) variiert.

8. Messvorrichtung nach einem der vorhergehenden Ansprüche, wobei eine Fläche von SPADs, die in einem Pixel (111) enthalten sind, abhängig vom Ort des Pixels (111) innerhalb der Detektionsfläche (110) der Empfangseinrichtung (14) variiert.

9. Messvorrichtung nach Anspruch 7 oder 8, wobei die Sendeeinrichtung (12) und die Empfangseinrichtung (14) nebeneinander entlang einer Parallaxenachse (113) angeordnet sind und wobei die Anzahl von SPADs (101), die in einem Pixel (111) enthalten sind, abhängig vom Ort entlang der Parallaxenachse (113) variiert.

10. Messvorrichtung nach Anspruch 7, 8 oder 9, wobei die Anzahl von SPADs (101), die in einem Pixel (111) enthalten sind, in Pixeln (111) nahe der Sendeeinrichtung (12) kleiner ist als in Pixeln (111) entfernt von der Sendeeinrichtung (12).

11. Messvorrichtung nach einem der Ansprüche 7 bis 10, wobei die Anzahl von SPADs (101), die in einem Pixel (111) enthalten sind, in Pixeln (111) nahe dem Zentrum (122) der Detektionsfläche (110) kleiner ist als in Pixeln (111) entfernt von dem Zentrum (122) der Detektionsfläche (110).

12. Messvorrichtung nach einem der vorhergehenden Ansprüche, wobei die Sendeeinrichtung (12) und die Empfangseinrichtung (14) derart ausgelegt sind, dass eine Anzahl von Pixeln (111), die durch von dem Zielobjekt (15) zurücklaufende optische Messstrahlung (16) gleichzeitig beleuchtet werden, in Abhängigkeit von einem Abstand (48) zwischen dem Zielobjekt (15) und der Messvorrichtung (10) variiert.

13. Messvorrichtung nach einem der vorhergehenden Ansprüche, ferner aufweisend eine nicht-automatisch-fokussierende Optik (52), um von dem Zielobjekt zurücklaufende optische Messstrahlung (16) auf die Detektionsfläche (110) zu leiten.

14. Messvorrichtung nach einem der vorhergehenden Ansprüche, wobei die Empfangseinrichtung (14) und die Auswerteeinrichtung (36) dazu ausgelegt sind, dass Detektionssignale einzelner Pixel (111) unabhängig von Detektionssignalen anderer Pixel (111) von der Auswerteeinrichtung (36) ausgewertet werden können.

15. Messvorrichtung nach einem der vorhergehenden Ansprüche, wobei die Empfangseinrichtung (14) und die Auswerteeinrichtung (36) dazu ausgelegt sind, eine Entfernung (48) zwischen der Messvorrichtung (10) und dem Zielobjekt (15) basierend auf einer Auswertung von Detektionssignalen ausschließlich von Pixeln (111) innerhalb einer effektiven Detektionsfläche (170), auf die Licht der von der Sendeeinrichtung beleuchten Fläche des Zielobjektes zurückgestrahlt wird, zu ermitteln.

16. Messvorrichtung nach einem der vorhergehenden Ansprüche, ferner aufweisend wenigstens einen Multiplexer (140), der dazu ausgelegt ist, Detektionssignale mehrerer Pixel (111) selektiv an die Auswerteeinrichtung (36) weiterzuleiten.

## Claims

1. Measuring device (10) for optical distance measurement, in particular handheld measuring device, comprising:
a transmitting unit (12) for emitting optical measurement radiation (13) toward a target object (15); a receiving unit (14) having a detection area (110) for detecting optical measurement radiation (16) returning from the target object (15); and
wherein an evaluation unit (36); the detection area (110) has a multiplicity of pixels (111),
wherein each pixel (111) has at least one SPAD (101) and wherein each of the multiplicity of pixels (111) is connected to the evaluation unit (36);
wherein the transmitting unit (12) and the receiving unit (14) are designed in such a way that optical measurement radiation (16) returning from the target object (15) simultaneously illuminates a plurality of pixels (111);
wherein the evaluation unit (36) is designed to determine a distance (48) between the measuring device (10) and the target object (15) on the basis of an evaluation of detection signals of a plurality of pixels (111), **characterized in that** at least some pixels (111) each contain a plurality of SPADs (101).

2. Measuring device according to Claim 1, wherein the evaluation unit (36) has at least one distance determining unit (130) designed to determine a time of flight of measurement radiation (13, 16) between emission by the transmitting unit (12) until detection of measurement radiation (16) returning from the target object (15) and to determine a distance therefrom.

3. Measuring device according to Claim 2, wherein a plurality of pixels (111) are connected to a distance determining unit (130) and the distance determining unit (130) is designed to determine the distance on the basis of detection signals of the plurality of pixels (111).

4. Measuring device according to Claim 2, wherein the evaluation unit (36) has a plurality of distance determining units (130) and the evaluation unit (36) is designed to determine the distance (48) between the measuring device (10) and the target object (15) on the basis of the distances determined by the distance determining units (130).

5. Measuring device according to any of the preceding claims, furthermore comprising at least one combiner (160) designed to combine detection signals of SPADs (101) which are contained in an individual pixel (111).

6. Measuring device according to any of the preceeding claims, furthermore comprising at least one pulse shortener in order to temporally shorten a digital signal generated by an SPAD.

7. Measuring device according to the preceding claims, wherein the number of SPADs (101) contained in a pixel (111) varies depending on the location of the pixel (111) within the detection area (110) of the receiving unit (14).

8. Measuring device according to any of the preceding claims, wherein an area of SPADs contained in a pixel (111) varies depending on the location of the pixel (111) within the detection area (110) of the receiving unit (14).

9. Measuring device according to Claim 7 or 8, wherein the transmitting unit (12) and the receiving unit (14) are arranged alongside one another along a parallax axis (113) and wherein the number of SPADs (101) contained in a pixel (111) varies depending on the location along the parallax axis (113).

10. Measuring device according to Claim 7, 8 or 9, wherein the number of SPADs (101) contained in a pixel (111) is smaller in pixels (111) near the transmitting unit (12) than in pixels (111) remote from the transmitting unit (12).

11. Measuring device according to any of Claims 7 to 10, wherein the number of SPADs (101) contained in a pixel (111) is smaller in pixels (111) near the center (122) of the detection area (110) than in pixels (111) remote from the center (122) of the detection area (110).

12. Measuring device according to any of the preceding claims, wherein the transmitting unit (12) and the receiving unit (14) are designed in such a way that a number of pixels (111) which are illuminated simultaneously by optical measurement radiation (16) returning from the target object (15) varies in a manner dependent on a distance (48) between the target object (15) and the measuring device (10).

13. Measuring device according to any of the preceding claims, furthermore comprising a non-automatically focusing optical unit (52) for directing optical measurement radiation (16) returning from the target object onto the detection area (110).

14. Measuring device according to any of the preceding claims, wherein the receiving unit (14) and the evaluation unit (36) are designed for the purpose that detection signals of individual pixels (111) can be evaluated independently of detection signals of other pixels (111) by the evaluation unit (36).

15. Measuring device according to any of the preceding claims, wherein the receiving unit (14) and the evaluation unit (36) are designed to determine a distance (48) between the measuring device (10) and the target object (15) on the basis of an evaluation of detection signals exclusively of pixels (111) within an effective detection area (170), onto which light from that area of the target object which is illuminated by the transmitting unit is radiated back.

16. Measuring device according to any of the preceding claims, furthermore comprising at least one multiplexer (140) designed to forward detection signals of a plurality of pixels (111) selectively to the evaluation unit (36).

## Revendications

1. Dispositif de mesure (10) destiné à mesurer optiquement une distance, en particulier un dispositif de mesure tenu à la main, comprenant :
un dispositif d'émission (12) destiné à émettre un rayonnement de mesure optique (13) vers un objet cible (15) ;
un dispositif de réception (14) comportant une surface de détection (110) destinée à détecter un rayonnement de mesure optique (16) renvoyé par l'objet cible (15) ; et
un dispositif d'analyse (36) ;
dans lequel la surface de détection (110) comprend une pluralité de pixels (111),
dans lequel chaque pixel (111) comprend au moins une SPAD (101) et dans lequel chacun de la pluralité de pixels (111) est connecté au dispositif d'analyse (36) ;
dans lequel le dispositif d'émission (12) et le dispositif de réception (14) sont conçus de manière à ce que le rayonnement de mesure optique (16) renvoyé par l'objet cible (15) éclaire simultanément une pluralité de pixels (111) ;
dans lequel le dispositif d'analyse (36) est conçu pour obtenir une distance (48) entre le dispositif de mesure (10) et l'objet cible (15) sur la base d'une analyse de signaux de détection de multiples pixels (111), **caractérisé en ce qu'**au moins certains pixels (111) contiennent respectivement une pluralité de SPAD (101).

2. Dispositif de mesure selon la revendication 1, dans lequel le dispositif d'analyse (36) comprend au moins un dispositif de détermination de distance (130), qui est conçu pour obtenir un temps de propagation du rayonnement de mesure (13, 16) entre une émission effectuée par le dispositif d'émission (12) et une détection d'un rayonnement de mesure (16) renvoyé par l'objet cible (15) et déterminer à partir de celui-ci une distance.

3. Dispositif de mesure selon la revendication 2, dans lequel une pluralité de pixels (111) sont connectés à un dispositif de détermination de distance (130) et le dispositif de détermination de distance (130) est conçu pour déterminer la distance sur la base de signaux de détection de la pluralité de pixels (111).

4. Dispositif de mesure selon la revendication 2, dans lequel le dispositif d'analyse (36) comprend une pluralité de dispositifs de détermination de distance (130) et en ce que le dispositif d'analyse (36) est conçu pour déterminer la distance (48) entre le dispositif de mesure (10) et l'objet cible (15) sur la base des distances déterminées par les dispositifs de détermination de distance (130).

5. Dispositif de mesure selon l'une quelconque des revendications précédentes, comprenant en outre au moins un combineur (160) qui est conçu pour combiner des signaux de détection de diodes SPAD (101) contenues dans un pixel individuel (111).

6. Dispositif de mesure selon l'une quelconque des revendications précédentes, comprenant en outre au moins un dispositif de raccourcissement d'impulsion destiné à raccourcir temporellement un signal numérique généré par une diode SPAD.

7. Dispositif de mesure selon l'une quelconque des revendications précédentes, dans lequel le nombre de diodes SPAD (101) contenues dans un pixel (111) varie en fonction de la position du pixel (111) à l'intérieur de la surface de détection (110) du dispositif de réception (14).

8. Dispositif de mesure selon l'une quelconque des revendications précédentes, dans lequel une surface de diodes SPAD contenues dans un pixel (111) varie en fonction de la position du pixel (111) à l'intérieur de la surface de détection (110) du dispositif de réception (14).

9. Dispositif de mesure selon la revendication 7 ou 8, dans lequel le dispositif d'émission (12) et le dispositif de réception (14) sont disposés côte à côte le long d'un axe de parallaxe (113) et dans lequel le nombre de diodes SPAD (101) contenues dans un pixel (111) varie en fonction de la position le long de l'axe de parallaxe (113).

10. Dispositif de mesure selon la revendication 7, 8 ou 9, dans lequel le nombre de diodes SPAD (101) qui sont contenues dans un pixel (111) est inférieur dans des pixels (111) proches du dispositif d'émission (12) à ce qu'il est dans des pixels (111) éloignés du dispositif d'émission (12).

11. Dispositif de mesure selon l'une quelconque des revendications 7 à 10, dans lequel le nombre de diodes SPAD (101) contenues dans un pixel (111) est inférieur dans les pixels (111) proche du centre (122) de la surface de détection (110) à ce qu'il est dans des pixels (111) éloignés du centre (122) de la surface de détection (110).

12. Dispositif de mesure selon l'une quelconque des revendications précédentes, dans lequel le dispositif d'émission (12) et le dispositif de réception (14) sont conçus de manière à ce qu'un nombre de pixels (111) qui sont simultanément éclairés par le rayonnement de mesure optique (16) renvoyé par l'objet cible (15) varie en fonction d'une distance (48) entre l'objet cible (15) et le dispositif de mesure (10).

13. Dispositif de mesure selon l'une quelconque des revendications précédentes, comprenant en outre une optique de focalisation non automatique (52) destinée à acheminer le rayonnement de mesure optique (16) renvoyé par l'objet cible vers la surface de détection (110).

14. Dispositif de mesure selon l'une quelconque des revendications précédentes, dans lequel le dispositif de réception (14) et le dispositif d'analyse (36) sont conçus de manière à ce que les signaux de détection de pixels individuels (111) puissent être analysés par le dispositif d'analyse (36) indépendamment de signaux de détection d'autres pixels (111).

15. Dispositif de mesure selon l'une quelconque des revendications précédentes, dans lequel le dispositif de réception (14) et le dispositif d'analyse (36) sont conçus pour déterminer une distance (48) entre le dispositif de mesure (10) et l'objet cible (15) sur la base d'une analyse de signaux de détection provenant exclusivement des pixels (111) situés à l'intérieur d'une surface de détection effective (170) sur laquelle est renvoyée la lumière de la surface de l'objet cible qui est éclairée par le dispositif d'émission.

16. Dispositif de mesure selon l'une quelconque des revendications précédentes, comprenant en outre au moins un multiplexeur (140) conçu pour réacheminer sélectivement des signaux de détection de multiples pixels (111) vers le dispositif d'analyse (36).
